# FASCICULE DE BREVET EUROPEEN

(11) **EP 3 362 765 B1**
(45) Date de publication et mention de la délivrance du brevet: **04.08.2021**
(21) Numéro de dépôt: 16790664.3
(22) Date de dépôt: 05.10.2016
(51) Int. Cl.: B25J 9/16, G01B 21/04, G01D 5/347

(54) **PROCÉDÉ ET SYSTÈME DE COMPENSATION D'ERREURS DE PRÉCISION D'UN HEXAPODE**
VERFAHREN UND SYSTEM ZUR KOMPENSATION VON GENAUIGKEITSFEHLERN EINES HEXAPODS
METHOD AND SYSTEM FOR COMPENSATING FOR ACCURACY ERRORS OF A HEXAPOD

(30) Priorité: 15.10.2015 FR 1559795
(43) Date de publication de la demande: 22.08.2018
(73) Titulaire: Micro-Controle - Spectra Physics, 91000 Evry (FR)
(72) Inventeur: DURAND, Eric, 45200 Amilly (FR); DUQUENOY, Franck, 45160 Olivet (FR)
(74) Mandataire: Gevers & Orès
(86) Numéro de dépôt international: PCT/FR2016/052552
(87) Numéro de publication internationale: WO 2017/064392

(56) Documents cités:
- WO-A1-99/28097
- LIN P D ET AL: "PASSIVE AND ACTIVE ERROR COMPENSATION OF MULTI-AXIS MACHINES", PROCEEDINGS OF THE WORLD CONGRESS ON INTELLIGENT MANUFACTURINGPROCESSES AND SYSTEMS, XX, XX, vol. 2, 13 février 1995 (1995-02-13), pages 1105-1116, XP002039134,

## Description

La présente invention concerne un procédé et un système de compensation d'erreurs de précision d'un hexapode.

On sait qu'un hexapode comporte une structure cinématique composée de deux plates-formes, une plate-forme de base et une plate-forme supérieure, et de six vérins. La plate-forme de base est fixe, alors que la plate-forme supérieure (ou chariot mobile) et les six vérins sont mobiles. Les vérins sont reliés par une première extrémité à la plate-forme supérieure via une articulation, l'autre extrémité de chaque vérin étant reliée à la base via une autre articulation. Tous les vérins sont indépendants les uns des autres et permettent d'orienter et de positionner la plate-forme supérieure.

L'hexapode est donc un système à mécanique parallèle permettant la mise en position et le mouvement d'objets dans l'espace suivant les six degrés de liberté. De par son architecture, ce système est utilisé pour le positionnement de haute précision, la mesure de position, ainsi que la génération de mouvements dans le cadre de tests en dynamique.

Les hexapodes trouvent des applications notamment dans les industries navale, spatiale, aéronautique, automobile, optique, médicale, nucléaire, électronique,...

Bien que les hexapodes présentent généralement des précisions satisfaisantes sur leurs axes, il apparaît quand même un certain niveau d'erreur. Un procédé de calibration d'un hexapode de l'art antérieur est connu de WO 99/28097 A1.

La présente invention a pour objet de remédier à cet inconvénient, en prévoyant de compenser des erreurs de précision.

Elle concerne un procédé de compensation d'erreurs de précision d'un hexapode, ledit hexapode comportant au moins :
- une base fixe ;
- un ensemble d'actionnement pourvu de six vérins de translation linéaire, indépendants et commandables ;
- une unité de commande de l'ensemble d'actionnement ; et
- un chariot mobile comportant une plate-forme liée par l'intermédiaire de l'ensemble d'actionnement à la base, chacun desdits vérins de l'ensemble d'actionnement étant lié par une première extrémité longitudinale via une première articulation à la base et par la seconde extrémité longitudinale via une seconde articulation au chariot, lesdits six vérins définissant six centres (ou points) de pivot sur la base et six centres (ou points) de pivot sur le chariot.

Selon l'invention, ledit procédé est remarquable en ce qu'il comprend :
- une étape de mesure consistant à déterminer des erreurs de géométrie et de position sur l'hexapode, l'étape de mesure comprenant :
   - une première sous-étape consistant à mesurer les positions de chacun des centres de pivot sur le chariot et de chacun des centres de pivot sur la base, pour déterminer des erreurs de position des centres de pivot, et à mesurer la longueur de chacun des vérins, pour déterminer des erreurs de longueur desdits vérins ; et
   - une deuxième sous-étape consistant à mesurer des erreurs de positionnement de chacun des vérins sur sa course ;
- une étape de calcul consistant à calculer, à partir des mesures réalisées à l'étape de mesure, des valeurs de compensation d'erreurs ; et
- une étape d'application consistant à appliquer les valeurs de compensation d'erreurs à l'unité de commande de l'hexapode, lors d'une utilisation de ce dernier.

Ainsi, grâce à l'invention, on est en mesure de déterminer et compenser les différents types d'erreurs (de géométrie et de position) susceptibles d'apparaître sur l'hexapode, de manière à disposer d'un hexapode particulièrement précis (avec un déplacement très précis et maîtrisé du chariot mobile par rapport à la base fixe) lors d'une utilisation ultérieure de l'hexapode.

Selon l'invention, ladite première sous-étape comprend plusieurs sous-étapes individuelles précisées ci-après.

De façon avantageuse, la première sous-étape de mesure comprend une première sous-étape individuelle consistant à mesurer les positions de chacun des centres de pivot sur la base, ladite première sous-étape individuelle consistant, pour mesurer les positions des centres de pivot sur la base :
- à fixer des billes sur la base à la position des centres de pivot ;
- à fixer la base sur une plaque rectifiée ; et
- à mesurer la position des billes à l'aide d'un dispositif de mesure à trois dimensions.

De plus, avantageusement, l'étape de calcul comprend une sous-étape consistant à comparer les valeurs mesurées des positions des centres de pivot (sur la base) à des valeurs théoriques correspondantes et à construire une matrice de compensation des erreurs de géométrie de la base.

En outre, de façon avantageuse, la première sous-étape de mesure comprend une deuxième sous-étape individuelle consistant à mesurer les positions de chacun des centres de pivot sur le chariot, ladite deuxième sous-étape individuelle consistant, pour mesurer les positions des centres de pivot sur le chariot :
- à fixer des billes sur le chariot à la position des centres de pivot ;
- à fixer le chariot sur une plaque rectifiée ; et
- à mesurer la position des billes à l'aide d'un dispositif de mesure à trois dimensions.

De plus, avantageusement, l'étape de calcul comprend une sous-étape consistant à comparer les valeurs mesurées des positions des centres de pivot (sur le chariot) à des valeurs théoriques correspondantes et à construire une matrice de compensation des erreurs de géométrie du chariot.

Par ailleurs, de façon avantageuse, la première sous-étape de mesure comprend une troisième sous-étape individuelle consistant à mesurer la longueur de chacun des vérins, ladite troisième sous-étape individuelle consistant à mesurer, pour chaque vérin, avec un dispositif de mesure à trois dimensions, la longueur du vérin entre les centres de rotules du vérin, avec le vérin à l'origine.

De plus, avantageusement, l'étape de calcul comprend une sous-étape consistant à comparer les valeurs mesurées des longueurs des vérins à des valeurs théoriques correspondantes et à construire une matrice de compensation des erreurs de longueur de vérins.

De plus, avantageusement, l'étape de calcul comprend une sous-étape consistant à utiliser les valeurs mesurées des erreurs de positionnement pour construire une matrice de compensation des erreurs de positionnement.

La présente invention concerne également un système de compensation d'erreurs de précision d'un hexapode tel que défini par la revendication 7.

Les figures annexées feront bien comprendre comment l'invention peut être réalisée. Sur ces figures, des références identiques désignent des éléments semblables.
La figure 1 est le schéma synoptique d'un mode de réalisation particulier d'un système de compensation d'erreurs de précision.
La figure 2 est une vue en perspective d'un hexapode auquel on applique l'invention.
Les figures 3 à 6 sont des vues en perspective d'ensembles de mesure d'un système de compensation d'erreurs.

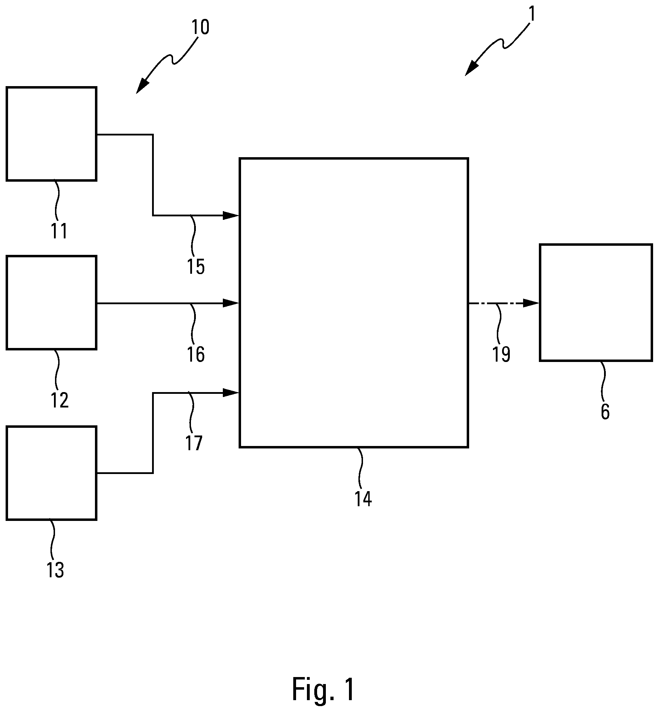

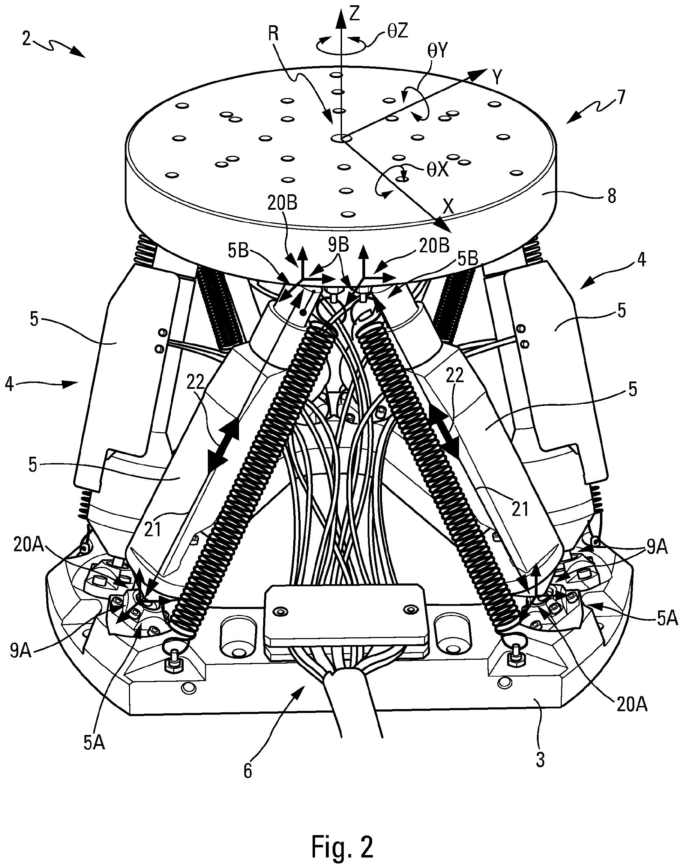

Le système 1 (ci-après « système de compensation 1 ») représenté schématiquement sur la figure 1 et permettant d'illustrer l'invention, est un système pour compenser des erreurs de précision sur un hexapode 2 tel que représenté, à titre d'illustration, sur la figure 2.

De façon usuelle, l'hexapode 2 comporte :
- une base 3 fixe ;
- un ensemble d'actionnement 4 pourvu de six vérins 5 de translation linéaire, qui sont indépendants les uns des autres, et dont la longueur est variable et commandable ;
- une unité de commande 6 (non représentée spécifiquement) pour commander l'ensemble d'actionnement 4 ; et
- un chariot mobile 7 comportant une plate-forme 8 liée par l'intermédiaire de l'ensemble d'actionnement 4 à la base 3.

Chacun des six vérins 5 de l'ensemble d'actionnement 4 est lié par une première extrémité longitudinale 5A via une première articulation 9A à la base 3 et par la seconde extrémité longitudinale 5B via une seconde articulation 9B à la plate-forme 8 du chariot mobile 7. Les articulations 9A et 9B représentent des rotules à deux ou trois degrés de liberté. Les six vérins 5 définissent ainsi six centres (ou points) de pivot sur la base 3 et six centres (ou points) de pivot sur la plate-forme 8.

L'hexapode 2 comprend donc six jambes, chaque jambe comportant un vérin 5 dont l'allongement permet de faire varier la longueur de la jambe.

Les deux plaques (plaque de base 3 et plate-forme 8) sont agencées sensiblement parallèlement à un plan XY (horizontal) défini par une direction dite X et une direction dite Y. Dans une position neutre desdites plaques 3 et 8, elles sont toutes deux complètement parallèles au plan XY.

Ces directions X et Y font partie d'un repère R (ou XYZ) qui est représenté sur la figure 2. Ce repère R destiné à faciliter la compréhension comprend, en plus des directions (ou axes) X et Y formant le plan XY, une direction (ou axe) Z qui est orthogonale audit plan XY, ainsi que des angles *θ*X, *θ*Y, et *θ*Z (mis en évidence par des doubles flèches), qui illustrent des rotations, respectivement, autour des axes X, Y et Z.

La base 3 peut être fixée, de façon usuelle, sur un élément de support (non représenté) via des moyens de fixation, par exemple des vis.

Quant au chariot mobile 7, il peut supporter, de façon usuelle, des éléments particuliers (non représentés) qui peuvent être fixés sur lui, via des moyens de fixation, par exemple des vis.

L'hexapode 2 est particulièrement bien adapté pour positionner ou déplacer en six degrés de liberté des pièces mécaniques ou optiques, en particulier pour les positionnements d'échantillons en spectrographie, pour l'alignement de fibre optique en optoélectronique, ou pour des alignements d'optiques.

L'ensemble d'actionnement 4 est donc configuré pour permettre un déplacement du chariot mobile 7 par rapport à la base 3. Plus précisément, l'ensemble d'actionnement 4 peut générer :
- un déplacement relatif selon de la direction X et/ou autour (*θ*X) de cette dernière ; et/ou
- un déplacement relatif selon la direction Y et/ou autour (*θ*Y) de cette dernière ; et/ou
- un déplacement relatif selon la direction Z et/ou autour (*θ*Z) de cette dernière.

L'hexapode 2 possède ainsi six degrés de liberté : trois degrés de liberté en translation (selon les axes X, Y et Z), ainsi que trois degrés de liberté en rotation (selon les angles *θ*X, *θ*Y et *θ*Z).

Les six vérins 5 sont actionnés (par l'unité de commande 6) afin de changer de longueur et ainsi faire varier l'orientation du chariot mobile 7 (par rapport à la base 3 fixe). A une position donnée du chariot mobile 7 correspond une combinaison unique de six longueurs des six vérins 5.

La base 3, le chariot mobile 7 et les vérins 5 sont donc reliés par les douze centres de pivot (six sur la base et six sur le chariot 7), et le pilotage de la longueur de chaque vérin 5 permet de déplacer le chariot mobile 7 de l'hexapode 2 selon ou autour des axes X, Y et Z.

Selon l'invention, le système de compensation 1 comporte, comme représenté sur la figure 1 :
- un système de mesure 10 configuré pour déterminer des erreurs de géométrie et de position sur l'hexapode 2, le système de mesure 10 comportant :
   - un ensemble de mesure 11 configuré pour mesurer les positions de chacun des centres de pivot 9A sur la base 3 et de chacun des centres de pivot 9B sur le chariot 7, afin de déterminer des erreurs de position des centres de pivot 9A et 9B ;
   - un ensemble de mesure 12 configuré pour mesurer la longueur de chacun des vérins 5, afin de déterminer des erreurs de longueur desdits vérins 5 ; et
   - un ensemble de mesure 13 configuré pour mesurer des erreurs de positionnement de chacun des vérins 5 sur sa course ; et
- une unité de calcul 14 qui est reliée par l'intermédiaire de liaisons 15 à 17 respectivement aux ensembles de mesure 11 à 13 et qui est configurée pour calculer, à partir des mesures réalisées par ces ensembles de mesure 11 à 13, des valeurs de compensation d'erreurs.

Les valeurs de compensation d'erreurs sont appliquées à l'unité de commande 6 de l'hexapode 2 lors d'une utilisation de ce dernier, comme illustré par une flèche 19 en traits mixtes sur la figure 1.

La précision de positionnement du chariot 7 suivant les axes X, Y, Z, U, V et W dépend essentiellement des trois éléments suivants :
- la précision de la position de chacun des centres de pivot 9A et 9B, comme illustré par des flèches de repères 20A et 20B sur la figure 2 ;
- la précision de la mesure de la longueur initiale (à l'origine) de chacun des vérins 5 (ou jambes), comme illustré par des flèches 21 sur la figure 2 ; et
- la précision de positionnement de chacun des vérins 5, comme illustré par des flèches 22 sur la figure 2.

Le système de compensation 1 permet d'améliorer la précision de positionnement de l'hexapode 2 en compensant les trois types d'erreurs précités.

Les compensations sont de type mathématique et sont supportées par l'unité de commande 6 (ou contrôleur) qui permet de piloter l'hexapode 2. On réalise ainsi :
- une compensation des écarts de position des centres de pivots 9A et 9B de la base 3 et du chariot 7 par rapport à la définition de la géométrie théorique ;
- une compensation de la longueur à l'origine de chacun des vérins 5 ; et
- une compensation des erreurs de positionnement de chacun des vérins 5.

Pour appliquer les compensations, l'unité de mesure 10 réalise des mesures qui fournissent les données d'entrée de calculs mis en œuvre par l'unité de calcul 14, dont les résultats sont transmis à l'unité de commande 6.

La technologie de réalisation des pivots, utilisée pour l'hexapode 2, permet de réaliser ces mesures.

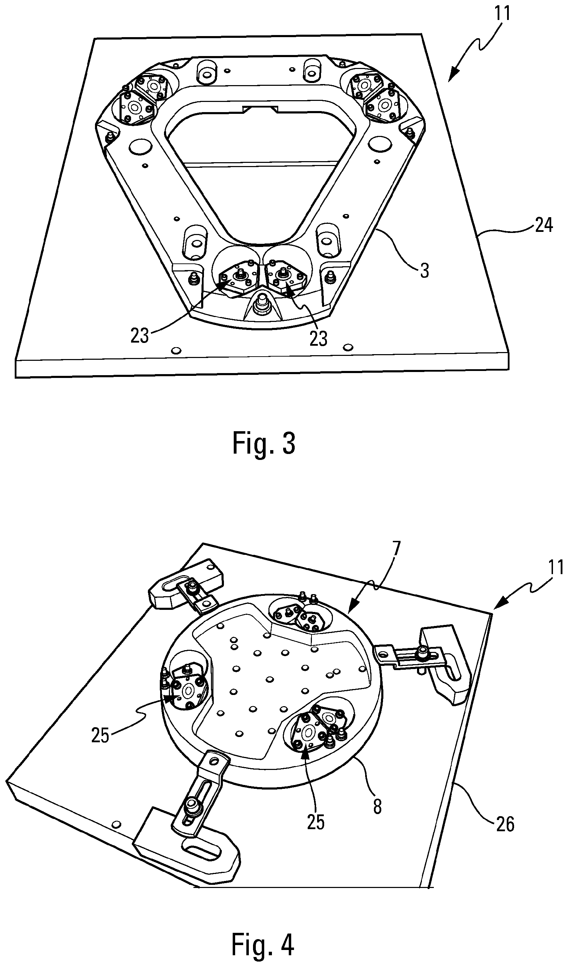

Dans un mode de réalisation préféré, pour mesurer les positions des centres de pivot sur la base 3, on met en œuvre les opérations suivantes :
- on fixe, par exemple par collage ou par un autre moyen, des billes 23 (par exemple en céramique ou en une autre matière) sur la base 3 à la position des centres de pivot, comme représenté sur la figure 3 ;
- on fixe la base 3 sur une plaque rectifiée 24 ; et
- on mesure la position des billes 23 à l'aide d'un dispositif de mesure à trois dimensions (non représenté).

La plaque rectifiée 24 et le dispositif de mesure font partie de l'ensemble de mesure 11.

Dans une variante de réalisation, le système de mesure 10 réalise une mesure directe des centres de pivot sur la base.

Dans ce cas, l'unité de calcul 14 compare les valeurs des positions des centres de pivot, mesurées de la manière précitée et reçus de l'ensemble de mesure 11, à des valeurs théoriques correspondantes enregistrées, et elle construit une matrice de compensation des erreurs de géométrie de la base 3.

Cette matrice est transmise à l'unité de commande 6.

En outre, pour mesurer les positions des centres de pivot sur le chariot 7, on met en œuvre les opérations suivantes :
- on fixe des billes 25 (par exemple en céramique ou en une autre matière) sur le chariot 7 à la position des centres de pivot, comme représenté sur la figure 4;
- on fixe le chariot 7 sur une plaque rectifiée 26 ; et
- on mesure la position des billes 25 à l'aide d'un dispositif de mesure à trois dimensions (non représenté).

La plaque rectifiée 26 et le dispositif de mesure font partie de l'ensemble de mesure 12.

Dans une variante de réalisation, le système de mesure 10 réalise une mesure directe des centres de pivot sur la base.

Dans ce cas, l'unité de calcul 14 compare les valeurs des positions des centres de pivot, mesurées de la manière précitée et reçus de l'ensemble de mesure 12, à des valeurs théoriques correspondantes enregistrées, et elle construit une matrice de compensation des erreurs de géométrie du chariot.

Cette matrice est transmise à l'unité de commande 6.

De préférence, l'unité de calcul 14 détermine une seule matrice de compensation à partir des deux matrices précédentes pour l'ensemble des douze centres de pivot. Cette matrice de compensation comprend alors douze coordonnées en X, Y et Z.

Dans une variante de réalisation, on mesure en une seule étape les positions des centres de pivot et les longueurs des vérins sur un hexapode monté, l'hexapode étant conçu pour permettre une telle mesure directe.

Par ailleurs, pour mesurer la longueur de chacun des vérins 5, on mesure, pour chaque vérin 5, avec un dispositif de mesure à trois dimensions, la longueur du vérin entre les centres de pivot du vérin 5, avec le vérin 5 à la position initiale de longueur minimale.

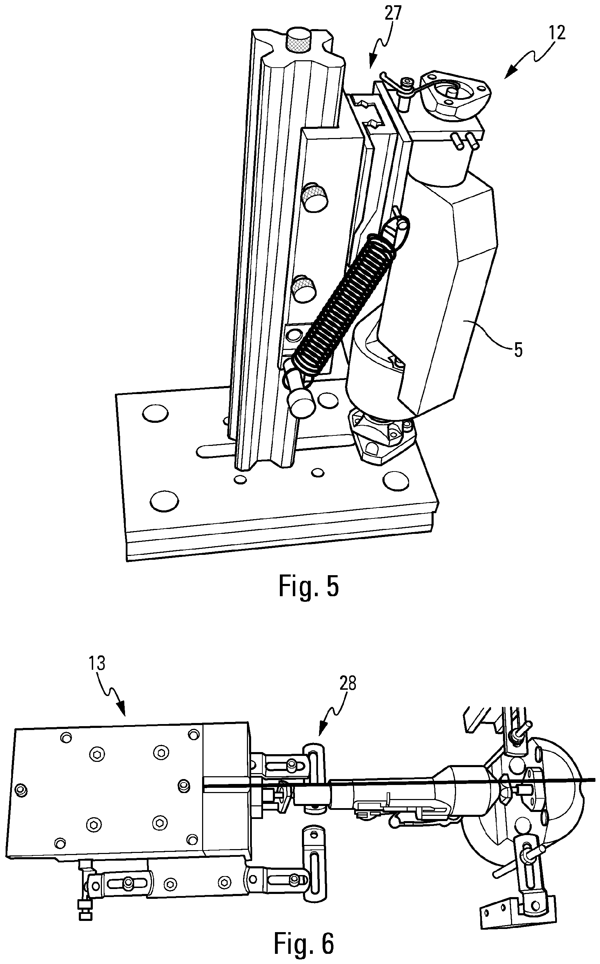

Plus particulièrement, on mesure la distance entre le centre de deux billes (par exemple en céramique ou en une autre matière) sur un dispositif 27 de mesure à trois dimensions lorsque le vérin 5 est à l'origine (longueur des jambes), comme illustré sur la figure 5.

Le pivot inférieur de cet outillage est maintenu de manière identique à ceux montés sur la base et sur le chariot de l'hexapode. La bille est fixée, par exemple collée. L'axe du nez de vérin est maintenu en 3 centres et le vérin est chargé, dans sa position d'origine, avec une force de 20N appliquée par un ressort suivant un axe défini par la platine de translation. La bille du pivot supérieur est posée dans la coupelle pivot du nez de vérin. Elle est maintenue avec un système de ressort qui assure son immobilisation pendant la phase de mesure.

La mesure est mise en œuvre en quatre étapes successives :
- mesure de la position du centre de la bille inférieure (vérin non monté) et repérage de la position d'un coin de la plaque de support ;
- montage du vérin et positionnement de la bille supérieure ;
- mesure de la position du centre de la bille supérieure ; et
- vérification de la position du coin de la plaque (pour valider qu'elle n'a pas bougé lors de la mise en place du vérin sur l'outillage).

Dans ce cas, l'unité de calcul 14 compare les valeurs mesurées des positions des longueurs des vérins 5 à des valeurs théoriques correspondantes, et elle construit une matrice de compensation des erreurs de longueur de vérins.

Par ailleurs, pour mesurer des erreurs de positionnement de chacun des vérins 5 sur sa course, on utilise de préférence le dispositif 28 représenté sur la figure 6.

Dans ce cas, l'unité de calcul 14 utilise les valeurs mesurées des erreurs de positionnement des vérins, pour construire une matrice de compensation des erreurs de positionnement.

La mise en œuvre de l'invention présente ainsi deux phases :
- une première phase pendant laquelle les différentes mesures précitées sont réalisées, puis les calculs des erreurs (ou écarts) présentées de préférence sous forme de matrice de compensations sont effectués ; et
- une seconde phase, pendant laquelle on utilise l'hexapode 2 de façon usuelle pour réaliser des opérations usuelles. Dans ce cas, on intègre préalablement les erreurs (ou écarts) calculées ou mesurées dans un ou des algorithmes usuels de l'unité de commande 6 (ou contrôleur) qui les prend en compte dans la détermination des déplacements du chariot mobile 7 par rapport à la base 3 fixe, dans le but de compenser ces erreurs.

On obtient ainsi un hexapode 2 présentant des déplacements particulièrement précis et maîtrisés entre le chariot mobile 7 et la base 3.

## Revendications

1. Procédé de compensation d'erreurs de précision d'un hexapode, ledit hexapode (2) comportant au moins :
- une base (3) fixe ;
- un ensemble d'actionnement (4) pourvu de six vérins (5) de translation linéaire, indépendants et commandables ;
- une unité de commande (6) de l'ensemble d'actionnement (4) ; et
- un chariot mobile (7) comportant une plate-forme (8) liée par l'intermédiaire de l'ensemble d'actionnement (4) à la base (3), chacun desdits vérins (5) de l'ensemble d'actionnement (4) étant lié par une première extrémité longitudinale (5A) via une première articulation (9A) à la base (2) et par la seconde extrémité longitudinale (5B) via une seconde articulation (9B) au chariot (7), lesdits six vérins (5) définissant six centres de pivot sur la base (3) et six centres de pivot sur le chariot (7),
ledit procédé comprenant :
- une étape de mesure consistant à déterminer des erreurs de géométrie et de position sur l'hexapode (2), l'étape de mesure comprenant :
• une première sous-étape de mesure consistant à mesurer les positions de chacun des centres de pivot sur le chariot (7) et de chacun des centres de pivot sur la base (3), pour déterminer des erreurs de position des centres de pivot, et à mesurer la longueur de chacun des vérins (5), pour déterminer des erreurs de longueur desdits vérins (5) ; et
• une deuxième sous-étape de mesure consistant à mesurer des erreurs de positionnement de chacun des vérins (5) sur sa course ; et
- une étape de calcul consistant à calculer, à partir des mesures réalisées à l'étape de mesure, des valeurs de compensation d'erreurs,
**caractérisé en ce que** la première sous-étape de mesure comprend :
- une première sous-étape individuelle consistant à mesurer les positions de chacun des centres de pivot sur la base (3), ladite première sous-étape individuelle consistant, pour mesurer les positions des centres de pivot sur la base (3) :
▪ à fixer des billes (23) sur la base (3) à la position des centres de pivot ;
▪ à fixer la base (3) sur une plaque rectifiée (24) ; et
▪ à mesurer la position des billes (23) à l'aide d'un dispositif de mesure à trois dimensions ; et
- une deuxième sous-étape individuelle consistant à mesurer les positions de chacun des centres de pivot sur le chariot (7), ladite deuxième sous-étape individuelle consistant, pour mesurer les positions des centres de pivot sur le chariot (7) :
▪ à fixer des billes (25) sur le chariot (7) à la position des centres de pivot ;
▪ à fixer le chariot (7) sur une plaque rectifiée (26) ; et
▪ à mesurer la position des billes (25) à l'aide d'un dispositif de mesure à trois
dimensions,
et **en ce que** ledit procédé comporte une étape d'application consistant à appliquer les valeurs de compensation d'erreurs à l'unité de commande (6) de l'hexapode (2), lors d'une utilisation de ce dernier.

2. Procédé selon la revendication 1,
**caractérisé en ce que** l'étape de calcul comprend une sous-étape consistant à comparer les valeurs mesurées des positions des centres de pivot à des valeurs théoriques correspondantes et à construire une matrice de compensation des erreurs de géométrie de la base (3).

3. Procédé selon l'une des revendications 1 et 2,
**caractérisé en ce que** l'étape de calcul comprend une sous-étape consistant à comparer les valeurs mesurées des positions des centres de pivot à des valeurs théoriques correspondantes et à construire une matrice de compensation des erreurs de géométrie du chariot (7).

4. Procédé selon l'une quelconque des revendications précédentes,
**caractérisé en ce que** la première sous-étape de mesure comprend une troisième sous-étape individuelle consistant à mesurer la longueur de chacun des vérins (5), ladite troisième sous-étape individuelle consistant à mesurer, pour chaque vérin (5), avec un dispositif (27) de mesure à trois dimensions, la longueur du vérin (5) entre les centres de rotules du vérin (5), avec le vérin (5) à l'origine.

5. Procédé selon la revendication 4,
**caractérisé en ce que** l'étape de calcul comprend une sous-étape consistant à comparer les valeurs mesurées des longueurs des vérins (5) à des valeurs théoriques correspondantes et à construire une matrice de compensation des erreurs de longueur de vérins (5).

6. Procédé selon l'une quelconque des revendications précédentes, **caractérisé en ce que** l'étape de calcul comprend une sous-étape consistant à utiliser les valeurs mesurées des erreurs de positionnement des vérins (5) pour construire une matrice de compensation des erreurs de positionnement.

7. Système de compensation d'erreurs de précision d'un hexapode, ledit hexapode (2) comportant :
- une base (3) fixe ;
- un ensemble d'actionnement (4) pourvu de six vérins (5) de translation linéaire, indépendants et commandables ;
- une unité de commande (6) de l'ensemble d'actionnement (4) ; et
- un chariot mobile (7) comportant une plate-forme (8) liée par l'intermédiaire de l'ensemble d'actionnement à la base (3), chacun desdits vérins (5) de l'ensemble d'actionnement (4) étant lié par une première extrémité longitudinale (5A) via une première articulation (9A) à la base (3) et par la seconde extrémité longitudinale (5B) via une seconde articulation (9B) au chariot (7), lesdits six vérins (5) définissant six centres de pivot sur la base (3) et six centres de pivot sur le chariot (7),
ledit système de compensation (1) comportant :
- un système de mesure (10) configuré pour déterminer des erreurs de géométrie et de position sur l'hexapode (2), le système de mesure (10) comportant :
• un premier ensemble de mesure (11, 12) configuré pour mesurer les positions de chacun des centres de pivot sur le chariot (7) et de chacun des centres de pivot sur la base (3), afin de déterminer des erreurs de position des centres de pivot, et pour mesurer la longueur de chacun des vérins (5), afin de déterminer des erreurs de longueur desdits vérins (5) ; et
• un deuxième ensemble de mesure (13) configuré pour mesurer des erreurs de positionnement de chacun des vérins (5) sur sa course ; et
- une unité de calcul (14) configurée pour calculer, à partir de ces mesures, des valeurs de compensation d'erreurs,
**caractérisé en ce que** ledit premier ensemble de mesure (11, 12) comprend :
- un ensemble de mesure (11) pour mesurer les positions des centres de pivot sur la base et les positions des centres de pivot sur le chariot (7), qui est configuré pour mesurer, lorsque des billes (23) sont fixées sur la base (3) à la position des centres de pivot et la base (3) est fixée sur une plaque rectifiée (24), la position des billes (23) à l'aide d'un dispositif de mesure à trois dimensions ; et qui est en outre configuré pour mesurer, lorsque des billes (25) sont fixées sur le chariot (7) à la position des centres de pivot et le chariot (7) est fixé sur une plaque rectifiée (26), la position des billes (25) à l'aide d'un dispositif de mesure à trois dimensions,
les valeurs de compensation d'erreurs étant destinées à être appliquées à l'unité de commande (6) de l'hexapode (2) lors d'une utilisation de ce dernier.

## Patentansprüche

1. Verfahren zur Kompensation von Präzisionsfehlern eines Hexapods, wobei der Hexapod (2) mindestens umfasst:
- eine stationäre Basis (3);
- eine Betätigungsbaugruppe (4), die mit sechs unabhängigen und steuerbaren Zylindern (5) zur linearen Verschiebung versehen ist;
- eine Steuereinheit (6) der Betätigungsbaugruppe (4); und - einen mobilen Wagen (7), der eine Plattform (8) umfasst, die über die Betätigungsbaugruppe (4) mit der Basis (3) verbunden ist, wobei jeder der Zylinder (5) der Betätigungsbaugruppe (4) an einem ersten Längsende (5A) über ein erstes Gelenk (9A) an der Basis (2) verbunden ist, und über das zweite Längsende (5B) über ein zweites Gelenk (9B) an dem Wagen (7) verbunden ist, wobei die sechs Zylinder (5) sechs Schwenkzentren auf der Basis (3) und sechs Schwenkzentren auf dem Wagen (7) definieren,
wobei das Verfahren umfasst:
- einen Messschritt, der darin besteht, Geometrie- und Positionsfehler auf dem Hexapod (2) zu bestimmen, wobei der Messschritt umfasst:
- einen ersten Messteilschritt, der darin besteht, die Positionen jedes der Schwenkzentren auf dem Wagen (7) und jedes der Schwenkzentren auf der Basis (3) zu messen, um Positionsfehler der Schwenkzentren zu bestimmen, und die Länge jedes der Zylinder (5) zu messen, um Längenfehler der Zylinder (5) zu bestimmen; und
- einen zweiten Messteilschritt, der darin besteht, Positionierungsfehler jedes der Zylinder (5) auf seinem Hub zu messen; und
- einen Berechnungsschritt, der darin besteht, ausgehend von den bei dem Messschritt ausgeführten Messungen Fehlerkompensationswerte zu berechnen, **dadurch gekennzeichnet, dass** der erste Messteilschritt umfasst:
- einen ersten individuellen Teilschritt, der darin besteht, die Positionen jedes der Schwenkzentren auf der Basis (3) zu messen, wobei der erste individuelle Teilschritt zum Messen der Positionen der Schwenkzentren auf der Basis (3) darin besteht:
- Kugeln (23) auf der Basis (3) an der Position der Schwenkzentren zu befestigen;
- eine geschliffene Platte (24) an der Basis (3) zu befestigen; und
- die Position der Kugeln (23) mit Hilfe einer Messvorrichtung mit drei Dimensionen zu messen; und
- einen zweiten individuellen Teilschritt, der darin besteht, die Positionen jedes der Schwenkzentren auf dem Wagen (7) zu messen, wobei der zweite individuelle Teilschritt zum Messen der Position der Schwenkzentren auf dem Wagen (7) darin besteht:
- Kugeln (25) auf dem Wagen (7) an der Position der Schwenkzentren zu befestigen;
- den Wagen (7) auf einer geschliffenen Platte (26) zu befestigen; und
- die Position der Kugeln (25) mit Hilfe einer Messvorrichtung mit drei Dimensionen zu messen;
und dass das Verfahren einen Anwendungsschritt umfasst, der darin besteht, die Fehlerkompensationswerte auf die Steuereinheit (6) des Hexapods (2) bei einer Verwendung dieses Letzteren anzuwenden.

2. Verfahren nach Anspruch 1,
**dadurch gekennzeichnet, dass** der Berechnungsschritt einen Teilschritt umfasst, der darin besteht, die Messwerte der Positionen der Schwenkzentren mit entsprechenden theoretischen Werten zu vergleichen und eine Kompensationsmatrix der Geometriefehler der Basis (3) aufzubauen.

3. Verfahren nach einem der Ansprüche 1 und 2,
**dadurch gekennzeichnet, dass** der Berechnungsschritt einen Teilschritt umfasst, der darin besteht, die Messwerte der Positionen der Schwenkzentren mit entsprechenden theoretischen Werten zu vergleichen und eine Kompensationsmatrix der Geometriefehler des Wagens (7) aufzubauen.

4. Verfahren nach einem der vorstehenden Ansprüche,
**dadurch gekennzeichnet, dass** der erste Messteilschritt einen dritten individuellen Teilschritt umfasst, der darin besteht, die Länge jedes der Zylinder (5) zu messen, wobei der dritte individuelle Teilschritt darin besteht, für jeden Zylinder (5) mit einer Messvorrichtung (27) mit drei Dimensionen die Länge des Zylinders (5) zwischen den Gelenkszentren des Zylinders (5) mit dem Zylinder (5) im Ursprung zu messen.

5. Verfahren nach Anspruch 4,
**dadurch gekennzeichnet, dass** der Berechnungsschritt einen Teilschritt umfasst, der darin besteht, die Messwerte der Längen der Zylinder (5) mit entsprechenden theoretischen Werten zu vergleichen und eine Kompensationsmatrix der Längenfehler von Zylindern (5) aufzubauen.

6. Verfahren nach einem der vorstehenden Ansprüche,
**dadurch gekennzeichnet, dass** der Berechnungsschritt einen Teilschritt umfasst, der darin besteht, die Messwerte der Positionierungsfehler der Zylinder (5) zu verwenden, um eine Kompensationsmatrix der Positionierungsfehler aufzubauen.

7. Verfahren zur Kompensation von Präzisionsfehlern eines Hexapods, wobei der Hexapod (2) umfasst:
- eine stationäre Basis (3);
- eine Betätigungsbaugruppe (4), die mit sechs unabhängigen und steuerbaren Zylindern (5) zur linearen Verschiebung versehen ist;
- eine Steuereinheit (6) der Betätigungsbaugruppe (4); und
- einen mobilen Wagen (7), der eine Plattform (8) umfasst, die über die Betätigungsbaugruppe (4) mit der Basis (3) verbunden ist, wobei jeder der Zylinder (5) der Betätigungsbaugruppe (4) an einem ersten Längsende (5A) über ein erstes Gelenk (9A) an der Basis (3) verbunden ist, und über das zweite Längsende (5B) über ein zweites Gelenk (9B) an dem Wagen (7) verbunden ist, wobei die sechs Zylinder (5) sechs Schwenkzentren auf der Basis (3) und sechs Schwenkzentren auf dem Wagen (7) definieren,
wobei das Kompensationssystem (1) umfasst:
- ein Messsystem (10), das dazu konfiguriert ist, Geometrie- und Positionsfehler auf dem Hexapod (2) zu bestimmen, wobei das Messsystem (10) umfasst:
- eine erste Messbaugruppe (11, 12), die dazu konfiguriert ist, die Positionen jedes der Schwenkzentren auf dem Wagen (7) und jedes der Schwenkzentren auf der Basis (3) zu messen, um Positionsfehler der Schwenkzentren zu bestimmen, und um die Länge jedes der Zylinder (5) zu messen, um Längenfehler der Zylinder (5) zu bestimmen; und;
- eine zweite Messbaugruppe (13), die dazu konfiguriert ist, Positionierungsfehler jedes der Zylinder (5) auf seinem Hub zu messen; und
- eine Recheneinheit (14), die dazu konfiguriert ist, ausgehend von diesen Messungen Fehlerkompensationswerte zu berechnen,
**dadurch gekennzeichnet, dass** die erste Messbaugruppe (11, 12) umfasst:
- eine Messbaugruppe (11) zum Messen der Positionen der Schwenkzentren auf der Basis und der Positionen der Schwenkzentren auf dem Wagen (7), die dazu konfiguriert ist, wenn Kugeln (23) auf der Basis (3) an der Position der Schwenkzentren befestigt sind, und die Basis (3) auf einer geschliffenen Platte (24) befestigt ist, die Position der Kugeln (23) mit Hilfe einer Messvorrichtung mit drei Dimensionen zu messen; und
die weiter dazu konfiguriert ist, wenn Kugeln (25) auf dem Wagen (7) an der Position der Schwenkzentren befestigt sind und der Wagen (7) auf einer geschliffenen Platte (26) befestigt ist,
die Position der Kugeln (25) mit Hilfe einer Messvorrichtung mit drei Dimensionen zu messen,
wobei die Fehlerkompensationswerte dazu bestimmt sind, auf die Steuereinheit (6) des Hexapods (2) bei einer Verwendung dieses Letzteren angewandt zu werden.

## Claims

1. Method for compensating for accuracy errors of a hexapod, said hexapod (2) comprising at least:
- a fixed base (3);
- an actuation assembly (4) equipped with six independent, controllable linear translation actuators (5);
- a control unit (6) for the actuation assembly (4); and
- a moveable carriage (7) comprising a platform (8) connected to the base (3) by means of the actuation assembly (4), each of said actuators (5) of the actuation assembly (4) being linked by a first longitudinal extremity (5A) to the base (2) by means of a first hinge (9A) and by a second longitudinal extremity (5B) to the carriage (7) by means of a second hinge (9B), said six actuators (5) defining six pivot centres on the base (3) and six pivot centres on the carriage (7), said method including :
- a measurement step consisting in determining geometry and positioning errors on the hexapod (2), the measuring step including:
• a first measurement sub-step consisting in measuring the positions of each of the pivot centres on the carriage (7) and each of the pivot centres on the base (3), to determine positioning errors of the pivot centres, and of measuring the length of each of the actuators (5), to determine length errors of said actuators (5); and
• a second measurement sub-step consisting in measuring positioning errors of each of the actuators (5) along their path; and
- a calculation step consisting in calculating, from the measurements made during the measurement step, error compensation values.
**characterised in that** the first measurement sub-step includes :
- a first individual sub-step consisting in measuring the positions of each of the pivot centres on the base (3), said first individual sub-step consisting in, to measure the positions of the pivot centres on the base (3):
- fastening the balls (23) onto the base (3) at the position of the pivot centres;
- fastening the base (3) to a rectifier plate (24); and
- measuring the position of the balls (23) with the help of a 3D measurement device; and
- a second individual sub-step consisting in measuring the positions of each of the pivot centres on the carriage (7), said second sub-step consisting in, to measure the positions of the pivot centres on the carriage (7):
- fastening the balls (25) to the carriage (7) in the position of the pivot centres;
- fastening the carriage (7) to a rectifier plate (26); and
- measuring the position of the balls (25) with the aid of a 3D measurement device,
and **in that** said method comprises an application step consisting in applying the error compensation values to the control unit (6) of the hexapod (2), during use of the latter.

2. Method according to claim 1,
**characterised in that** the calculation step comprises a sub-step consisting in comparing the measured values of the positions of the pivot centres to corresponding theoretical values and of constructing a compensation matrix of the geometry errors of the base (3).

3. Method according to any one of claims 1 and 2,
**characterised in that** the calculation step includes a sub-step consisting in comparing the measured values of the positions of the pivot centres to corresponding theoretical values and of constructing a compensation matrix of the geometry errors of the carriage (7).

4. Method according to any one of the preceding claims,
**characterised in that** the first measurement sub-step includes a third individual sub-step consisting in measuring the length of each of the actuators (5), said third individual sub-step consisting in measuring, for each actuator (5), with a 3D measurement device (27), the length of the actuator (5) between the centres of the balls of the actuator (5), with the original actuator (5).

5. Method according to claim 4,
**characterised in that** the calculation step includes a sub-step consisting in comparing the measured values of the lengths of the actuators (5) to corresponding theoretical values and of constructing a compensation matrix of the lengths errors of the actuators (5).

6. Method according to any one of the preceding claims,
**characterised in that** the calculation step includes a sub-step consisting in using the measured values of the positioning errors of the actuators (5) to construct a compensation matrix of positioning errors.

7. System for compensating for accuracy errors of a hexapod, said hexapod (2) comprising:
- a fixed base (3);
- an actuation assembly (4) equipped with six independent, controllable linear translation actuators (5);
- a control unit (6) for the actuation assembly (4); and
- a moveable carriage (7) comprising a platform (8) linked to the base (3) by means of the actuation assembly, each of said actuators (5) of the actuation assembly (4) being linked by a first longitudinal extremity (5A) to the base (3) by means of a first hinge (9A) and by the second longitudinal extremity (5B) to the carriage (7) by means of a second hinge (9B), said six actuators (5) defining six pivot centres on the base (3) and six pivot centres on the carriage (7), said compensation system (1) comprising :
- a measurement system (10) configured to determine geometry and positioning errors on the hexapod (2), the measurement system (10) comprising:
• a first measurement assembly (11, 12) configured to measure the positions of each of the pivot centres on the carriage (7) and each of the pivot centres on the base (3), in order to determine positioning errors of the pivot centres, and to measure the length of each of the actuators (5), in order to determine length errors of said actuators (5); and
• a second measurement assembly (13) configured to measure positioning errors of each of the actuators (5) along its path; and
- a calculation unit (14) configured to calculate, from these measurements, error compensation values,
**characterised in that** said first measurement assembly (11, 12) comprises:
- a measurement assembly (11) for measuring the positions of the pivot centres on the base (3) and the positions of the pivot centres on the carriage (7), which is configured to measure, when the balls (23) are fastened onto the base (3) at the position of the pivot centres and the base (3) is fastened to a rectifier plate (24), the position of the balls (23) with the help of a 3D measurement device; and which is moreover configured to measure, when the balls (25) are fastened onto the carriage (7) at the position of the pivot centres and the carriage (7) is fastened to a rectifier plate (26), the position of the balls (25) with the help of a 3D measurement device,
the error compensation values being destined to be applied to the control unit (6) of the hexapod (2), during use of the latter.
